(19) **Europäisches Patentamt / European Patent Office / Office européen des brevets**

(11) **EP 4 786 537 A1**

(12) **EUROPEAN PATENT APPLICATION**
published in accordance with Art. 153(4) EPC

(43) Date of publication:
05.08.2026   Bulletin 2026/32

(21) Application number: 24872014.6

(22) Date of filing: 19.09.2024

(51) International Patent Classification (IPC):
$C08J\ 11/26^{(2006.01)}$   $B29B\ 17/02^{(2006.01)}$
$C08K\ 5/05^{(2006.01)}$   $C08L\ 67/00^{(2006.01)}$
$C08L\ 75/04^{(2006.01)}$

(52) Cooperative Patent Classification (CPC):
B29B 17/02; C08J 11/26; C08K 5/05; C08L 67/00;
C08L 75/04; Y02W 30/62

(86) International application number:
PCT/JP2024/033371

(87) International publication number:
WO 2025/070222 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  29.09.2023  JP 2023168968

(71) Applicant: TEIJIN FRONTIER CO., LTD.
Osaka-shi, Osaka 530-0005 (JP)

(72) Inventors:
• TSURUDA Ryo
  Osaka-shi, Osaka 530-0005 (JP)
• YAMAOKA Kenji
  Osaka-shi, Osaka 530-0005 (JP)
• SUNOUCHI Satoshi
  Osaka-shi, Osaka 530-0005 (JP)

(74) Representative: Carpmaels & Ransford LLP
One Southampton Row
London WC1B 5HA (GB)

(54) **METHOD FOR RECOVERING POLYESTER AND METHOD FOR MANUFACTURING RECYCLED POLYESTER**

(57)   Provided is a method for recovering a polyester, including subjecting a structure that has a substrate composed mainly of a fiber made of a polyester and contains a polyurethane resin to a treatment in a lower alcohol in the presence of a first-row transition metal acetate as a catalyst at a temperature of 125°C or more and 185°C or less, thereby removing the polyurethane resin. Further, it is preferable that the polyurethane resin is a porous polyurethane, the polyurethane resin is a chemically crosslinked polyurethane, and the first-row transition metal acetate is manganese acetate, zinc acetate, or cobalt acetate. Also provided is a method for producing a recycled polyester, in which the polyester obtained by any one of the above methods for recovering a polyester is further depolymerized into an aromatic bis(hydroxyalkyl) dicarboxylate and then repolymerized.

EP 4 786 537 A1

# EP 4 786 537 A1

**Description**

Technical Field

The present invention relates to a method for recovering a polyester from a structure that has a substrate composed mainly of a fiber made of a polyester and contains a polyurethane resin, and also to a method for producing a recycled polyester using the recovered polyester.

Background Art

As structures containing a polyurethane resin with a substrate composed of a polyester fiber, a wide range of products have been put to practical use, including sheet-like artificial leathers, synthetic leathers, and printed garments, as well as garments and interior goods using a flexible polyurethane foam, such as brassieres and shoulder pads, for example.

However, when attempting to reuse these products after use, because the properties are significantly different between polyester fibers and polyurethane resins, it has been difficult to achieve effective recycling.

For example, as a method for recycling an artificial leather or synthetic leather composed mainly of a fiber and a polyurethane resin, PTL 1 proposes a recyclable artificial leather (synthetic leather) that is excellent in abrasion resistance and texture. However, this invention proposes an artificial leather having improved recyclability, which is obtained by replacing a commonly used polyurethane resin with a polyester-based or polyamide-based thermoplastic resin emulsion, and is not intended to recycle conventionally used artificial leathers or synthetic leathers.

In addition, PTL 2 discloses a separation and recovery method for an artificial leather provided with a surface skin layer. However, although the resin used is a polyurethane resin, the technology proposed is for forming a special, easy-to-peel surface skin layer on an artificial leather, and thus cannot be said to be a general-purpose recycling technology.

Meanwhile, an invention in which a polyester is recovered and recycled from a structure containing a used polyester fiber and various resins has also been proposed. However, when using a polyester recovered in this manner, there has been a problem in that the regenerated polyester polymer is prone to coloration and resistant to whitening. In particular, when attempting chemical recycling in which a polyester is depolymerized and repolymerized, the repolymerized polyester tends to have a brown hue and is inferior in terms of quality.

As a technical solution to such coloration problems, for example, PTL 3 discloses a method for chemically recycling a waste polyethylene terephthalate product. According to the disclosure, first, as a coloration-causing substance removal step, it has been attempted to perform, after the depolymerization of a polyester, an adsorption treatment in which the coloration-causing substance is brought into contact with an adsorbent, a decomposition treatment in which the coloration-causing substance is decomposed with a decomposing agent, a reduction treatment in which the coloration-causing substance is reduced with a reducing agent, or the like.

However, even with this method, it has been difficult to recover polyester fiber constituents with high purity from a structure containing a polyester fiber and a polyurethane resin.

Citation List

Patent Literature

PTL 1: JP2012-201994A

PTL 2: JP2022-67626A

PTL 3: JP2008-88096A

Summary of Invention

Technical Problem

An object of the invention is to provide a method for recovering a polyester from a structure mainly containing a fiber made of a polyester and a polyurethane resin, and also a method for producing a polyester using the recovered polyester.

Solution to Problem

In order to solve the above problems, the following invention is provided.

1. A method for recovering a polyester, including subjecting a structure that has a substrate composed mainly of a fiber made of a polyester and contains a polyurethane resin to a treatment in a lower alcohol in the presence of a first-row transition metal acetate as a catalyst at a temperature of 125°C or more and 185°C or less, thereby removing the polyurethane resin.

2. The method for recovering a polyester according to the above 1, in which the polyurethane resin is a porous polyurethane.

3. The method for recovering a polyester according to the above 1 or 2, in which the polyurethane resin is a chemically crosslinked polyurethane.

4. The method for recovering a polyester according to any one of the above 1 to 3, in which the fiber made of a polyester is made of a polyester having an alkylene terephthalate or an alkylene naphthalate as a main repeating unit.

5. The method for recovering a polyester according to any one of the above 1 to 4, in which the lower alcohol is an alcohol selected from the group consisting of methanol, ethanol, 1-propanol, 2-propanol, ethylene glycol, 1,2-propanediol, 1,3-propanediol, 1,3-butanediol, 1,4-butanediol, 1,5-pentanediol, diethylene glycol, ethylene glycol, glycerin, and benzyl alcohol.

6. The method for recovering a polyester according to any one of the above 1 to 5, in which the first-row transition metal acetate is manganese acetate, zinc acetate, or cobalt acetate.

7. The method for recovering a polyester according to any one of the above 1 to 6, in which the treatment is further followed by washing with water or an organic solvent.
The invention further encompasses another invention described below.

8. A method for producing a recycled polyester, including depolymerizing a polyester obtained by the method according to any one of the above 1 to 7 into an aromatic bis(hydroxyalkyl) dicarboxylate, and then repolymerizing the aromatic bis(hydroxyalkyl) dicarboxylate.

Advantageous Effects of Invention

According to the invention, a method for recovering a polyester from a structure mainly containing a fiber made of a polyester and a polyurethane resin, and also a method for producing a polyester using the recovered polyester, can be provided.

Brief Description of Drawings

[FIG. 1] FIG. 1 shows the IR waveform of the fibrous residue (recovered polyester sample) recovered in Example 1.
[FIG. 2] FIG. 2 shows the IR waveform of the fibrous residue (recovered polyester sample) recovered in Example 6.
[FIG. 3] FIG. 3 shows the IR waveform of the fibrous residue (recovered polyester sample) recovered in Example 7.
[FIG. 4] FIG. 4 shows the IR waveform of the fibrous residue (recovered polyester sample) recovered in Example 9.

Description of Embodiments

Hereinafter, the invention will be described in detail.
The method for recovering a polyester of the invention is a method for recovering a polyester from a structure that has a substrate composed mainly of a fiber made of a polyester and contains a polyurethane resin. Here, with respect to the fiber made of a polyester, "mainly" means that among the fibers constituting the substrate of the structure, the most abundant fiber is the fiber made of a polyester, and it is preferable that the fiber made of a polyester accounts for 50 mass% or more, still more preferably 90 mass% or more, and particularly preferably 100 mass% of the fiber weight. In addition, when the total mass of the structure containing a fiber-based substrate and a polyurethane resin is taken as the basis, it is preferable that the fiber made of a polyester accounts for 20 mass% or more and 95 mass% or less, preferably 30 mass% or more and 90 mass% or less, and still more preferably 40 mass% or more 80 mass% or less. As non-polyester other fibers constituting the substrate, it is preferable that they are fibers that can be easily separated together with the polyurethane resin constituting the structure or by other methods.

Here, the polyester constituting the fiber is a polycondensate synthesized by dehydrating and condensing a polycarboxylic acid and a polyalcohol to form an ester bond. Then, as the polyester, polymers that have an ester bond and are generally classified into aliphatic polyesters, semi-aromatic polyesters, wholly aromatic polyesters, and the like can be used.

As the polycarboxylic acid constituting the polyester, it is preferable to use a dicarboxylic acid or an ester-forming derivative thereof. Among them, as the polycarboxylic acid constituting the polyester used in invention, it is more preferable to mainly use terephthalic acid or an aromatic dicarboxylic acid such as 2,6-naphthalenedicarboxylic acid. In addition, it is also preferable that terephthalic acid is mainly used as the polycarboxylic acid, and further a component such as isophthalic acid is used as a copolymerization component. More specifically, a polyester copolymerized with isophthalic acid or 5-sodium sulfoisophthalic acid is also preferable.

In addition, as the polyalcohol, which is another component constituting the polyester, it is preferable to use a diol or an ester-forming derivative thereof. More specifically, aliphatic glycols having 2 to 20 carbon atoms, that is, ethylene glycol, 1,3-propanediol, propylene glycol, 1,4-butanediol, neopentyl glycol, 1,5-pentanediol, 1,6-hexanediol, and the like, can be mentioned. Among them, as the alcohol constituting the polyester used in the invention, it is preferable to use ethylene glycol, 1,3-propanediol, or 1,4-butanediol.

A polyester obtained by combining the polycarboxylic acid and the polyalcohol as described above is used as the polyester of the invention. The polyester is preferably a semi-aromatic polyester, and still more preferably a polyalkylene terephthalate or a polyalkylene naphthalate. In particular, the polyalkylene terephthalate is preferably any one of polyethylene terephthalate, polytrimethylene terephthalate, and polybutylene terephthalate. In addition, the polyalkylene naphthalate is preferably any one of polyethylene naphthalate, polytrimethylene naphthalate, and polybutylene naphthalate.

Meanwhile, the polyurethane resin contained in the structure is not particularly limited as long as it is a polyurethane resin that can be combined with a substrate using the polyester fiber described above. For example, a segmented polyurethane resin or a segmented polyurethane urea resin, which forms crosslinking points through a physically crosslinked structure based on hydrogen bonding in the hard segment portion, a polyurethane resin, which forms crosslinking points through a chemically crosslinked structure based on covalent bonding formed by a crosslinking agent, or the like can be used. Among them, the latter crosslinked polyurethane resin can be used in applications such as foamed urethane for sponges, cushioning materials, and the like, artificial leathers and synthetic leathers, pigment prints for textile products, and adhesive layers for sheet-like materials, and is suitable for utilizing the soft, elastomer-like texture. In addition, in order to impart durability, it is also preferable to use a polyurethane having a three-dimensional crosslinked structure at the molecular level.

More specifically, specific examples of the polyol component and polyisocyanate component constituting the polyurethane resin in the invention are as follows.

As the polyol component serving as a raw material for the polyurethane resin, polyester polyols obtained by the polycondensation of an aliphatic carboxylic acid such as malonic acid, succinic acid, maleic acid, adipic acid, glutaric acid, pimelic acid, suberic acid, azelaic acid, or sebacic acid, or an aromatic dicarboxylic acid such as phthalic acid, isophthalic acid, terephthalic acid, or hexahydroisophthalic acid, with an aliphatic glycol such as ethylene glycol, 1,2-propanediol, 1,3-propanediol, 1,3-butanediol, 1,4-butanediol, 2,2-dimethyl-1,3-propanediol, 1,6-hexanediol, 3-methyl-1,5-pentanediol, 1,8-octanediol, diethylene glycol, triethylene glycol, dipropanediol, tripropanediol, cyclohexane-1,4-diol, or cyclohexane-1,4-dimethanol; polyether polyols such as compounds obtained by adding ethylene oxide, propylene oxide, or the like to a glycol component such as ethylene glycol, 1,2-propanediol, 1,3-propanediol, 1,3-butanediol, 1,4-butanediol, 2,2-dimethyl-1,3-propanediol, 1,6-hexanediol, 3-methyl-1,5-pentanediol, 1,8-octanediol, diethylene glycol, triethylene glycol, dipropanediol, tripropanediol, cyclohexane-1,4-diol, or cyclohexane-1,4-dimethanol, or alternatively to a ring-opening polymer of ethylene oxide, propylene oxide, butylene oxide, or styrene oxide alone or two or more of them using the above polyester polyol as an initiator, a ring-opening polymer of tetrahydrofuran, a polyhydric alcohol such as glycerin, pentaerythritol, trimethylolpropane, sorbitol, or sucrose, an aliphatic amine compound such as ammonia, ethylenediamine, or an ethanolamine, an aromatic amine compound such as toluenediamine or diphenylmethane-4,4'-diamine, and/or a mixture thereof; polymer polyols such as polymerized polyols obtained by allowing a polyether polyol to react with an ethylenically unsaturated monomer (e.g., butadiene, acrylonitrile, styrene, etc.) in the presence of a radical polymerization catalyst; and the like can be used.

Similarly, as the polyisocyanate component serving as a raw material for the polyurethane resin, aromatic polyisocyanates such as tolylene diisocyanate (TDI), 4,4'-or 4,2'-diphenylmethane diisocyanate (MDI), naphthalene diisocyanate, and xylylene diisocyanate, alicyclic polyisocyanates such as isophorone diisocyanate and dicyclohexamethane diisocyanate, aliphatic polyisocyanates such as tetramethylene diisocyanate, pentamethylene diisocyanate, and hexamethylene diisocyanate, free isocyanate-containing prepolymers obtained by the reaction of such a polyisocyanate with a polyol, modified polyisocyanates such as carbodiimide-modified isocyanates, mixed polyisocyanates thereof, and the like can be exemplified.

Then, the method for recovering a polyester of the invention is more effective even in the case where the polyurethane is physically crosslinked or chemically crosslinked.

For chemical crosslinking, it is preferable to use an agent in which the above polyol or polyisocyanate has three or more functional groups, particularly a polyol having three or more hydroxyl functional groups. However, because the hardness of the polyurethane increases when the degree of crosslinking is too high, it is preferable to use a polyol or polyisocyanate having five or less functional groups.

In addition, in order to improve the physical properties of the polyurethane, it is preferable to crosslink not only the main chain of the polyurethane backbone but also its side chains, and it is also preferable to use the following crosslinking agents.

As crosslinking agents for the polyurethane used in the invention, polyhydric alcohols such as ethylene glycol, triethylene glycol, propylene glycol, 1,3-butanediol, glycerin, trimethylolpropane, pentaerythritol, and sorbitol, amines such as ethylenediamine, diethylenetriamine, hexamethylenediamine, hydrazine, diethyltoluenediamine, and diethylenetriamine, amino alcohols such as diethanolamine and triethanolamine, and compounds obtained by adding ethylene oxide or polypropylene oxide to such an active hydrogen compound are preferably used.

In addition, a polyurethane resin is a thermoplastic resin having a urethane bond (-NHCOO-), and is usually composed of a low-melting-point soft segment having bendability and a high-melting-point hard segment. The soft segment is composed of a long-chain polyol and a diisocyanate, and the hard segment is composed of a diisocyanate and a short-chain diol (chain extender).

The types of polyurethane resin can also be classified according to the structure of the soft segment, and the three main types are as follows:

polyether-based polyurethane resins whose soft segment component is a polyether diol such as polytetramethylene glycol, polypropylene glycol, or polyethylene glycol, polyester-based polyurethane resins whose soft segment component is a polyester polyol such as polycaprolactone polyol, polyethylene adipate, or polypropylene adipate, and polycarbonate-based polyurethane resins whose soft segment component is polycarbonate polyol.

In addition, the hard segment mainly has a structure in which an aromatic diisocyanate such as diphenylmethane diisocyanate (MDI) or tolylene diisocyanate (TDI) is bonded to a chain extender typified by ethylene glycol, 1,4-butanediol, ethylenediamine, or the like.

The method for recovering a polyester of the invention can be applied to the above various polyurethanes, and is an excellent and practical method.

Then, the structure serving as the recovery target in the invention is a structure composed of the fiber made of a polyester and the polyurethane resin as described above. More specific examples of the structure include artificial leathers and synthetic leathers, various cushions used in furniture, bedding, and interior applications, various garment pads such as shoulder pads and brassiere pads, and further products obtained by pigment printing or polyurethane resin lamination on the surface of a fiber-based substrate. In addition, the term "structure containing a polyurethane resin" encompasses not only a structure in which a polyurethane resin is present inside the substrate obtained by impregnating a fiber-based substrate with a polyurethane resin, for example, but also a mode in which a polyurethane resin constitutes a coating layer on the surface, and refers to a structure in which the polyurethane resin component is present integrally within the structure or on the structure surface.

More specifically, for example, in the case where the structure is an artificial leather or a synthetic leather, not only structures in which a fiber substrate is impregnated with a polyurethane resin, but also structures in which a fiber substrate is impregnated or coated with a polyurethane resin, as well as those obtained by further applying a polyurethane resin to the surface of such a structure by coating or the like, are preferable. In addition, although a nonwoven fabric or a woven or knitted fabric can be used as the fiber substrate, considering the texture, it is preferable to use a nonwoven fabric, which is soft. In addition, as the polyurethane for impregnation into the substrate, a non-crosslinked wet-coagulated polyurethane is generally used. The polyurethane forms a porous structure in the fiber substrate such as a nonwoven fabric, leading to a soft texture. As the polyurethane for a coating layer on the substrate surface, in addition to the porous non-crosslinked wet-coagulated polyurethane described above, a dry-process polyurethane that forms a dense film, as well as various foamed polyurethanes, can also be used. These polyurethanes can of course be used in a non-crosslinked state, but it is also preferable to crosslink them in order to enhance their physical properties. In addition, as a method of using a crosslinked polyurethane, it is also preferable to use the crosslinked polyurethane in an intermediate binder layer between the substrate and the coating layer in order to enhance the adhesive strength between the substrate and the coating layer. As such a binder polyurethane, it is preferable to use a two-component polyurethane resin containing a crosslinking agent.

In addition, for various cushions used in furniture, bedding, and interior applications and various garment pads such as shoulder pads and brassiere pads, a combination of a fiber-based substrate with a foamed polyurethane is preferable.

As the foamed polyurethane, foamed polyurethanes obtained by various methods, such as a method in which voids are created in the process of removing the contained solvent as in the wet-coagulated polyurethane used for artificial leathers and the like described above (solvent removal method), a method that uses a chemical reaction (chemical reaction gas utilization method), a method that uses a solvent having a low boiling point (low-boiling-point solvent utilization method), and a method that incorporates air (mechanical incorporation method), can be favorably used.

Among them, as the foamed polyurethane, a soft polyurethane foam is preferable. For example, one obtained by a known method, such as a one-shot method in which a polyol and a polyisocyanate are allowed to directly react in the presence of a foaming agent such as water, a catalyst, or the like, or a prepolymer method in which a polyol and a polyisocyanate are allowed to react in advance to obtain an isocyanate-terminated prepolymer, and then this prepolymer is allowed to react with a polyol in the presence of a foaming agent, a catalyst, is preferable. As a more specific production method, for example, it is possible to use a polyurethane foam obtained by a method in which mixed and stirred foaming raw materials (reaction raw material mixture) are discharged onto a belt conveyor, and while the belt conveyor moves, the raw materials are allowed to naturally foam and cure at room temperature and atmospheric pressure to cause continuous production, followed by curing in a drying oven and then cutting into a desired shape, or the like. In order to improve the physical properties, it is preferable that a chemically crosslinked structure is further formed.

As the polyurethane resin contained in the structure of the invention, a foamed polyurethane having many pores inside is preferable. The wet-coagulated polyurethanes, soft polyurethane foams, and the like described above can be mentioned. Because of the presence of many pores, the surface area in contact with the solution is large, making recovery easier.

In addition, it is also preferable that the structure used in the invention is a product in which a polyurethane resin containing a coloring agent such as a pigment is applied to the surface of a fiber-based substrate by printing or gravure coating, or is a product in which a polyurethane resin coating layer is laminated on the surface.

It is also preferable that the polyurethane used in such a product is chemically crosslinked to improve its physical properties. In the case of a binder resin for pigment printing or a curable urethane-based adhesive, which is preferably used, after its application, a chemically crosslinked structure is preferably introduced in the presence of a crosslinking agent or water.

Usually, a polyurethane resin having a chemically crosslinked structure, such as three-dimensional crosslinking, forms a network-like polymer structure, making the crosslinking points resistant to breakage, and thus cannot be dissolved using mere organic solvents. However, the recovery method of the invention has made it possible to recover a polyester fiber component even from a structure containing a polyurethane resin having a chemically crosslinked structure.

The method for recovering a polyester of the invention is a method for recovering a polyester, characterized in that a polyurethane resin is removed from the structure containing a polyurethane resin with a polyester fiber substrate described above. More specifically, it is a method in which a structure that has a substrate composed mainly of a fiber made of a polyester and contains a polyurethane resin is subjected to a treatment in a lower alcohol in the presence of a first-row transition metal acetate as a catalyst at a temperature of 125°C or more and 185°C or less, thereby removing the polyurethane resin.

As the lower alcohol used in the recovery method of the invention, monohydric alcohols, dihydric alcohols (also referred to as diols or glycols), and trihydric alcohols having a linear hydrocarbon group with 5 or less carbon atoms, benzyl alcohols having an aromatic ring, and the like can be mentioned. They have relatively low viscosity even at room temperature, easily permeate polyurethanes, and thus are optimal for the invention.

More specifically, methanol, ethanol, 1-propanol, 2-propanol, ethylene glycol, 1,2-propanediol, 1,3-propanediol, 1,3-butanediol, 1,4-butanediol, 1,5-pentanediol, diethylene glycol, glycerin, benzyl alcohol, and the like can be mentioned. Among them, ethylene glycol, diethylene glycol, propanediol, and benzyl alcohol are more preferable, and ethylene glycol is particularly preferable. They are unlikely to undergo boiling, evaporation, decomposition, or side reactions in the treatment temperature range described below, and have good permeability into polyurethanes because of their moderate viscosity, allowing for more efficient recovery.

Further, in the method for recovering a polyester of the invention, in addition to the use of a lower alcohol described above, it is necessary to perform the treatment in the presence of a first-row transition metal acetate as a catalyst at a temperature of 125°C or more and 185°C or less.

As specific examples of first-row transition metals preferably used in the invention, titanium, chromium, manganese, iron, cobalt, nickel, copper, and zinc can be mentioned, and, among them, manganese, zinc, and cobalt are particularly preferable. One object of the invention is to further depolymerize and repolymerize the recovered polyester to produce a chemically recycled polyester. Even if manganese or zinc remains during the polyurethane-polyester separation and recovery step, such a metal is unlikely to adversely affect the quality (particularly the hue) of the chemically recycled polyester in the subsequent steps of depolymerization and repolymerization.

Incidentally, the mechanism by which first-row transition metals produce better results compared to the case of using other alkali metals, alkaline earth metals, and the like as catalysts is not well understood. However, it is believed that in the system of the invention, a complex between a urethane bond and a lower alcohol is easily formed, resulting in an increased reaction rate, and the polyurethane bond decomposition reaction (a lower alcohol is added to a urethane group via substitution) in a lower temperature region than the polyester depolymerization reaction (alcoholysis, glycolysis) takes place within a shorter period of time.

Incidentally, the same effect is not observed with alkali metals or alkaline earth metals other than first-row transition metals, and the polyester-polyurethane separation cannot be performed well.

In addition, in the invention, an acetate of a first-row transition metal is used. The mechanism is also unclear, but this is presumably due to the use of the lower organic salt. That is, compared to the state of elemental metals or metal ions, organic salts exhibit higher permeability into polyurethanes, which are organic polymers.

Then, it is preferable that the amount of such a first-row transition metal acetate to be added to a lower alcohol is determined depending on the amount of the structure containing a polyester fiber and a polyurethane resin serving as the object to be treated, and the amount added is preferably not more than 3 mass% of the weight of the structure. It is still more preferable that the amount added to a lower alcohol is 0.05 to 1.5 mass%, particularly preferably 0.1 to 0.5 mass%, of the weight of the structure.

Then, in the recovery method of the invention, as the treatment temperature, a range of 125°C or more and 185°C or less is employed. When the temperature is less than 125°C, the polyurethane decomposition reaction is suppressed, and, for example, the lower alcohol in the reaction solution is hardly colored. When the temperature is more than 185°C, although the polyurethane decomposition reaction becomes faster, at the same time, the polyester depolymerization reaction (alcoholysis, glycolysis) also progresses, making it impossible to sufficiently recover the polyester component. Further, the optimum reaction temperature also varies depending on the combination of the lower alcohol and catalyst used. For example, in the case where ethylene glycol is used, the temperature is preferably within a range of 135 to 183°C, and particularly preferably 155 to 180°C. In addition, in the case where benzyl alcohol is used, the temperature is more preferably within a range of 125 to 145°C.

In addition, the pressure during the treatment is preferably atmospheric pressure, but in the case where a solvent having a low boiling point is used, the treatment is preferably performed under pressure.

Then, with respect to the amount of the lower alcohol solution during the treatment, it is preferable to perform the treatment with a solution in an amount of 3 to 1,000 times the weight of the textile product, which is the structure to be treated. The amount is still more preferably 5 to 500 times, particularly preferably 8 to 50 times, the weight of the textile product. In addition, during the treatment with the solution, in addition to static immersion, it is also preferable to stir the solution using flow circulation, a rotating blade, or the like.

Incidentally, in order to improve the speed of the polyester-polyurethane separation and the purity, it is preferable that the structure is cut, crushed, granulated, or otherwise processed into as small a size as possible. This makes it possible to increase the contact surface area between the catalyst-containing lower alcohol and the structure. For example, in the case where the structure is a sheet-like material, it is preferable to cut it into a size of 50 mm square or less, still more preferably 5 to 30 mm square or less. In addition, a smaller thickness is also better, and a thickness of 10 mm or less, further 0.5 to 5 mm, is suitable.

In addition, in the recovery method of the invention, it is particularly effective that the polyurethane is a foamed polyurethane and has a porous structure or a foamed structure. The contact surface area of the structure with the lower alcohol in the bath increases. In addition, a case where the single filament fineness of the fiber constituting the substrate is small, a case where the substrate has a nonwoven fabric structure, and a case where the polyurethane resin in the substrate is finely dispersed are preferable. As a result, the surface area in contact with the lower alcohol increases, making the treatment easier.

In addition, also in the case where a coating layer is present, it is preferable that the coating layer is a porous polyurethane having a porous structure or a foamed structure. Alternatively, it is preferable that a porous polyurethane is further present between the fiber substrate and the dense coating layer. In particular, although a crosslinked dense coating layer leads to reduced solubility in a lower alcohol, in the case where a porous polyurethane having excellent solubility is present between the fiber substrate and the dense coating layer, it becomes easy to recover only the polyester fiber from the substrate.

In the recovery method of the invention, liquid removal by filtration after the immersion treatment in the solution is effective even when performed only once. Further, in order to increase the purity of the recovered polyester, it is preferable that the recovered polyester after liquid removal is once washed with water or an organic solvent and then filtered again. This makes it possible to more effectively remove polyurethane decomposition products and undissolved polyurethane that may adhere to the recovered polyester.

As the organic solvent for washing used at this time, those having high affinity for polyesters, such as methanol, ethanol, ethylene glycol, diethylene glycol, acetone, toluene, xylene, and aqueous acetic acid solutions, have high washing efficiency and thus are preferable.

In addition, it is also possible to repeat immersion and liquid removal several times. As the liquid removal treatment, various methods such as a compression treatment, a liquid removal treatment by centrifugation, and Soxhlet extraction can be used. In addition, it is preferable that the liquid removal treatment is performed such that the weight of the textile product containing the solution after each liquid removal treatment is 300% or less, still more preferably 150 to 250%, and particularly preferably 180 to 220% of the dry weight of the textile product.

The recovered polyester after liquid removal and washing needs to be dried to confirm its yield, and vacuum drying at 25°C or more and 95°C or less, particularly 60 to 95°C, is suitable. The degree of vacuum is preferably 12 kPa or less, and particularly preferably within a range of 20 to 200 Pa (0.02 to 0.2 kPa). Incidentally, a temperature equal to or lower than the flash point or ignition point of the lower alcohol used is preferable.

In the polyester obtained by such a method for recovering a polyester of the invention, the polyurethane component has been effectively removed. In addition, in the case where the textile product is a dyed product, the dye is also effectively removed.

Then, a method for producing a recycled polyester according to another aspect of the invention is a method for producing a recycled polyester, in which the polyester obtained by the method for recovering a polyester described above is depolymerized into an aromatic bis(hydroxyalkyl) dicarboxylate, and then the aromatic bis(hydroxyalkyl) dicarboxylate is repolymerized. Then, it has become possible to obtain a polyester with a low yellowness index and a high whiteness index.

Further, in this method for producing a recycled polyester, a catalyst is used during depolymerization, and it is preferable that a first-row transition metal-based catalyst is selected as the catalyst. More specifically, first-row transition metal-based oxides, fatty acid salts, carbonates, acetates, sulfates, phosphates, oxides, hydroxides, halides, alcoholates, and the like are exemplified. It is preferable to use one of them or even a combination of two or more kinds. In the invention, among first-row transition metals, manganese, zinc, and cobalt are particularly preferable, and oxides and acetates thereof are preferable. More specifically, manganese oxide, manganese acetate, zinc oxide, zinc acetate, cobalt oxide, and cobalt acetate can be mentioned, and manganese acetate, zinc acetate, and cobalt acetate are particularly preferable. Among them, manganese acetate is most favorable.

In addition, the catalyst to be used is preferably dissolved in an alkylene glycol in advance and used as a solution. As the alkylene glycol (hereinafter sometimes abbreviated as AG), it is preferable to use the same one as the diol component forming the backbone structure of the polyester used in the textile product. In addition, it is also possible to use the diol constituting the final product polyester obtained by repolymerizing the intermediate aromatic bis(hydroxyalkyl) dicarboxylate.

As alkylene glycols that form or can form the backbone structure of the polyester, for example, ethylene glycol (EG) can be exemplified in the case where the polyester is polyethylene terephthalate (PET), 1,3-propanediol (trimethylene glycol, C3G) in the case where the polyester is polytrimethylene terephthalate, and 1,4-butanediol (C4G) in the case where the polyester is polybutylene terephthalate. In addition, as the alkylene glycol, a mixture of the above alkylene glycols may also be used depending on the purpose.

Incidentally, the effect of the invention is particularly manifested in the case of a white structure that does not contain a coloring material. For example, although a polyester depolymerized product often shows a gradual increase in the degree of discoloration during longterm storage or the like, a polyester depolymerized with a manganese-based catalyst shows noticeably less discoloration.

In addition, the amount of catalyst used during depolymerization for obtaining the recycled polyester of the invention is preferably 20 to 500 mmol% based on the polyester. Further, the amount is preferably 30 to 300 mmol%, particularly preferably 50 to 150 mmol%, based on the polyester. Here, "1 mol%" indicates the ratio of the number of catalyst molecules to the structural units of the polyester, and "1 mmol%" is 1/1000 of that. In particular, use of a manganese-based catalyst has made it possible to reduce the amount used. When the amount of catalyst used is too small compared to this range, the catalytic activity is insufficient, while when it is too large, the effect of inhibiting discoloration is reduced.

In the method for producing a recycled polyester of the invention, it is preferable that after depolymerization using a catalyst, the temperature is lowered to cause crystallization in an alkylene glycol. With respect to the temperature-lowering conditions during crystallization, a method in which the temperature is lowered from 60°C or more to 25°C or less, or further cooled to 15°C or less, is preferable. Further, it is preferable to perform solid-liquid separation after crystallization, and it is preferable that the alkylene glycol content in the cake after solid-liquid separation is 100 mass% or less. Further, the alkylene glycol content is preferably set to 55 mass% or less or adjusted to a range of 1 to 30 mass%, or particularly preferably set to a range of 5 to 25 mass%. In addition, with respect to the amount of alkylene glycol initially used during depolymerization, the amount used is preferably 2 to 20 times, more preferably 3 to 10 times, the amount of the polyester after the recovery treatment. In this way, as a result of using an increased amount of alkylene glycol during depolymerization and performing crystallization and solid-liquid separation, in the production method of the invention, it has become possible to further reduce the incorporation of the depolymerization catalyst and other foreign substances. In addition, particularly in the case where manganese acetate is used as a catalyst, due to its high solubility in an alkylene glycol, the amount of catalyst remaining in the subsequent steps can be more effectively reduced.

Further, in the method for producing a recycled polyester of the invention, it is preferable that the cake after depolymerization is washed with water or an alkylene glycol after the crystallization as described above. Further, it is preferable to treat the cake in a Nutsche filter while spraying a washing liquid. As a result of performing these treatments, the depolymerization catalyst dissolved in the alkylene glycol, other substances that cause coloration, and the like can be washed away, and an aromatic bis(hydroxyalkyl) dicarboxylate with a higher degree of purification can be obtained. The solution used for washing preferably has low viscosity, and, from this point of view, it is preferable to use water. The amount of the washing liquid is preferably 1 time to 100 times, more preferably 1.5 times to 10 times, the weight of the cake. The liquid temperature during washing is preferably within a range of 0°C to 40°C. When the temperature is too high, the cake itself is likely to dissolve, reducing the yield. Subsequently, the cake is dried in a vacuum dryer or the like, for example, whereby an aromatic bis(hydroxyalkyl) dicarboxylate can be obtained.

In addition, the obtained aromatic bis(hydroxyalkyl) dicarboxylate may be subjected to an additional treatment to adsorb foreign substances and the like using an adsorbent such as activated carbon. Incidentally, in the case where the alkylene glycol used in the production method of the invention is the same as the diol component of the polyester resin after repolymerization, repolymerization without drying is also a preferred mode of the method for producing a polyester.

The aromatic bis(hydroxyalkyl) dicarboxylate obtained by such a production process depends on the type of polyester or alkylene glycol used. In the case where the raw material is a polyester mainly using terephthalic acid as the polycarboxylic acid (polyalkylene terephthalate), the method is preferably for producing bis(hydroxyalkyl) benzenedicarboxylate (hereinafter sometimes referred to as BHAT; bishydroxyalkyl terephthalate). More specifically, in the case where C3G (1,3-propanediol (trimethylene glycol)) is used as the alkylene glycol, BHPT (bishydroxypropyl terephthalate) is produced, while in the case where C4G (1,4-butanediol) is used, BHBT (bishydroxybutyl terephthalate) is produced. Particularly in the case where polyethylene terephthalate, which is composed mainly of terephthalic acid and ethylene glycol as polyester-constituting components, is used, bis(hydroxyethyl) benzenedicarboxylate (BHET; bishydroxyethyl terephthalate) can be produced.

Further, such an aromatic bis(hydroxyalkyl) dicarboxylate can be repolymerized by a conventionally known method to produce a recycled polyester resin that is resistant to coloration and has an excellent hue.

Next, the production process for a polyester polymer, in which the aromatic bis(hydroxyalkyl) dicarboxylate obtained by this depolymerization is repolymerized, will be described.

As the catalyst used in repolymerization for obtaining a polyester resin, antimony-based, germanium-based, titanium-based, and like known catalysts can be used, and it is particularly preferable to use diantimony trioxide. It is preferable to perform the polycondensation reaction while allowing alkylene glycols and the like, which are generated in the reaction during repolymerization, to flow out of the reactor. The amount of catalyst used is preferably within a range of 10 to 1,000 ppm based on the weight of the aromatic bis(hydroxyalkyl) dicarboxylate used. Further, after polycondensation using a catalyst, a conventionally known phosphorus-based stabilizer such as orthophosphoric acid or phosphorous acid is preferably used. The amount of phosphorus-based stabilizer used is each preferably within a range of 1 to 100 ppm based on the weight of the aromatic bis(hydroxyalkyl) dicarboxylate used.

The polyester resin obtained in this manner is a resin that is less likely to undergo discoloration such as yellowing, unlike the case of using a conventionally known depolymerization catalyst such as magnesium hydroxide, sodium hydroxide, potassium hydroxide, magnesium carbonate, sodium carbonate, or potassium carbonate. Such reduced discoloration was to such an extent that it was visually observable even at the stage of the intermediate aromatic bis(hydroxyalkyl) dicarboxylate. In addition, this was particularly notable in the b* value among the L*, a*, and b* color values measured using a colorimeter after repolymerization into a resin. Whereas the polyester produced under the conditions of the invention had a value not more than -3, more preferably not more than -3.5, the values of those produced using other catalysts were higher, and some even had positive values (strong yellowness). The reason for this is not well understood, but some factors are believed to work effectively. For example, a manganese-based catalyst allows for depolymerization at a low concentration and is unlikely to produce coloring byproducts. In addition, such a catalyst is easily dissociated from the aromatic bis(hydroxyalkyl) dicarboxylate also during subsequent steps such as crystallization, and is thus extremely unlikely to remain as an impurity.

Examples

Hereinafter, the invention will be described in further detail with reference to examples, but the invention is not limited thereto in any way. Incidentally, the values in the examples were determined by the following methods.

In addition, with respect to the amount of catalyst added, the unit "mol%" of the catalyst relative to the polyester indicates the ratio of the number of catalyst molecules to the constituent units of the polyester.

(1) Measurement Method

1) Intrinsic Viscosity (IV)

0.6 g of a polyester was heated and dissolved in 50 cc of o-chlorophenol and then once cooled. From the solution viscosity of the solution measured at a temperature condition of 35°C using an Ubbelohde viscometer, calculation was performed using a separately prepared calibration curve.

2) Glass Transition Temperature (Tg), Melting Point (Tm)

10 mg of a sample was cut out and placed in an aluminum pan, and the melting point was measured using a differential scanning calorimeter "DSC Apparatus Q10" manufactured by TA Instruments-Waters LLC. The measurement conditions were as follows. First, the temperature was once raised from 25°C to 300°C at a temperature rise rate of 20°C/min, followed by rapid cooling and quenching. Then, the temperature of the quenched sample was raised from 25°C to 300°C at 20°C/min, and the crystalline melting point was determined.

3) Fiber Fineness

Measurement was performed in accordance with JIS L1013:2021 8.3.1, Method A.

4) The Number of Fiber Filaments

Measurement was performed in accordance with JIS L1013:2010 8.4.

5) Fiber Strength and Elongation

Measurement was performed in accordance with JIS L1013:2010 8.5.1.

6) Thickness

Measurement was performed in accordance with JIS L1913:2010 6.1.1, Method A.

7) Weight per Unit

Measurement was performed in accordance with JIS L1913:2010 6.2.

8) IR Measurement (Infrared Spectroscopy)

The target sample was subjected to infrared spectroscopy measurement using "IRSprint" manufactured by Shimadzu Corporation. The measurement conditions are as follows: wavelength range: 400 to 4,000 $cm^{-1}$, resolution: 4 $cm^{-1}$, the number of acquisitions: 20. Peaks in the obtained waveform were observed. Based on the presence or absence of the absorption peak at 3,290 $cm^{-1}$ specific to urethane bonds, the presence or absence of residual polyurethane in the polyester was determined.

9) Polymer Hue

A repolymerized polymer (5 g) was pressed between two metal plates to form a plate, and then heated at 140°C × 2 hours to crystallize the sample. With respect to the measurement sample, the L*, a*, and b* color values were measured using a measuring apparatus ("ZE-6cm-1000" manufactured by Nippon Denshoku Industries Co., Ltd.) in accordance with JIS Z8781-4:2013.

The yellowness index (YI) and the whiteness index (W) were calculated by the following formula (1) and the following formula (2), respectively.

Yellowness index (YI): $0.34 - 71.7 \times a/L + 178.78 \times b/L$ (1)

$$\text{Whiteness index (W): } 100 - \sqrt{\{(100 - L)^2 + a^2 + b^2\}} \quad (2)$$

A higher yellowness index (YI) value indicates stronger yellowness, and a higher whiteness index (W) value indicates higher whiteness.

[Example 1]

(Polyester Recovery Step)

A needle-punched nonwoven fabric having a weight per unit of 220 g/m$^2$ made of a polyethylene terephthalate (hereinafter referred to as "PET") short fiber was used as a substrate. This substrate was impregnated and coated with a polyether polyester-based wet-process polyurethane (hereinafter, polyurethane will be referred to as "PU") to obtain a wet-process PU-impregnated coated substrate having a weight per unit of 412 g/m$^2$. The resin/fiber ratio (R/F) at this time was 47/53. In the substrate, the PU in the impregnated substrate and the PU in the coating layer both had a porous structure.

A crosslinked binder PU layer and a surface skin PU layer were further laminated on the substrate by lamination processing to obtain a grain-finished artificial leather. The weight per unit of the binder PU layer was 56 g/m$^2$, and the weight per unit of the surface skin PU was 42 g/m$^2$. The binder PU layer and the surface skin PU layer both had a non-porous dense structure. In addition, the binder PU layer was a chemically crosslinked PU using a polyisocyanate-based crosslinking agent, and the surface skin PU layer was a polyether polyester-based dry-process PU.

The obtained artificial leather (hereinafter referred to as "artificial leather 1") was an artificial leather having a thickness of 1.3 mm and a total weight per unit of 510 g/m$^2$, in which the PET nonwoven fabric constituted 43 mass% of the total, with part of the PUs being chemically crosslinked. In addition, as a result of the differential scanning calorimetry (DSC) of this artificial leather, it was confirmed that the polyester fiber serving as the substrate was PET with Tg = 70°C and Tm = 256°C.

This artificial leather was crushed to a size of about 20 mm square or less, preparing a sample weighing 400 g. Then, the 400-g sample was charged into a 5-liter separable flask. Next 2,000 g of ethylene glycol (hereafter referred to as "EG") was prepared, then 1.5 g of manganese acetate (0.375 mass% relative to the sample) was dissolved as a catalyst, and the mixture was charged into the separable flask. Subsequently, the separable flask was heated with a mantle heater while adjusting the internal temperature to 160°C, followed by stirring at atmospheric pressure for 4 hours.

In the separable flask, the PUs in the artificial leather gradually and finely dispersed into EG. After a lapse of 4 hours, the PET fiber inside and part of the PUs, which appeared to remain undecomposed, were scattered throughout EG.

Stirring was stopped after a lapse of 4 hours, and the entire contents of the separable flask were subjected to Nutsche filtration to remove undissolved substances.

Subsequently, the residual EG and undissolved PUs remaining on the surface of the PET fiber were removed by washing with acetone, followed by drying under vacuum at 80°C $\times$ 8 hr in a vacuum dryer with a vacuum level of 0.3 kPa, recovering a white fibrous residue. The mass of the recovered material after the treatment was 161 g. The IR measurement of the recovered material showed no absorption at wavelengths attributable to PUs, and exhibited only a PET-derived absorption spectrum, indicating that the PUs had been almost completely removed.

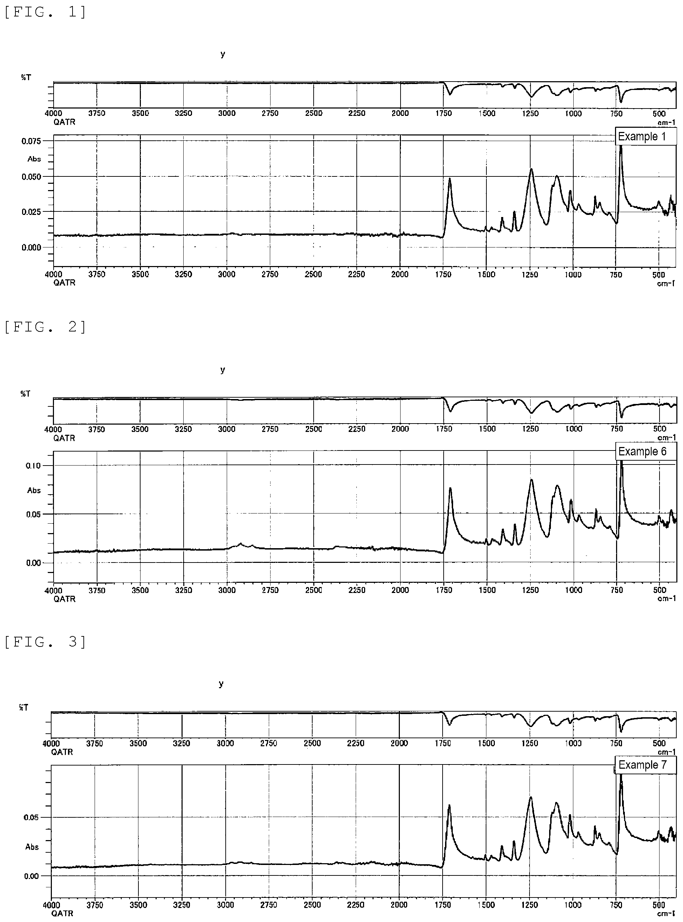

The melting point and other physical properties of the recovered sample are shown in Table 1, and the IR waveform is shown in FIG. 1.

(Polyester Recycling Step)

300 parts by mass of the recovered material obtained by the same treatment as above, 1,500 parts by mass of ethylene glycol (EG), and 0.38 parts by mass of manganese acetate as a depolymerization catalyst (100 mmol% relative to PET, assuming that the recovered material consists entirely of PET) were charged into a 2-L separable flask, followed by nitrogen sealing. At this time, manganese acetate was dissolved in EG in advance and then added.

Subsequently, the separable flask containing the sample was heated with a mantle heater to an internal temperature set at 220°C, and a depolymerization treatment was performed with stirring at atmospheric pressure for 4 hours. The BHET (bis(hydroxyethyl) benzenedicarboxylate) solution after depolymerization was colorless and transparent, and no coloration was seen. The depolymerized solution was further filtered through a 200-$\mu$m mesh to remove solids remaining inside, and then slowly cooled to 70°C. Subsequently, with stirring and cooling, the temperature was lowered as follows: from 70°C $\rightarrow$ 40°C during the elapsed time from 0 $\rightarrow$ 10 minutes, from 40°C $\rightarrow$ 30°C during the elapsed time from 10 $\rightarrow$ 60 minutes, and from 30°C $\rightarrow$ 15°C during the elapsed time from 60 $\rightarrow$ 180 minutes. Subsequently, stirring was performed for 60 minutes while the internal temperature remained 15°C, and the internal temperature was lowered to precipitate BHET crystals (total of 4 hours), thereby giving a BHET/EG slurry.

The BHET/EG slurry was subjected to a compression treatment using a filter press manufactured by Nihon Rokasochi Co., Ltd., thereby performing the solid-liquid separation of BHET and EG. The separated BHET at this time contained EG in an amount of 35 mass% based on the weight of the cake recovered after filter pressing. After the EG separation, while spraying 2 times its mass of 25°C pure water, the cake was subjected to water washing treatment using a Nutsche filter.

After the completion of solid-liquid separation, BHET was then dissolved in 20 times its mass of hot water (90°C), and 0.25 times its mass of activated carbon was further added thereto, followed by stirring for 1 hour. Subsequently, Nutsche filtration was performed to remove the activated carbon, and the aqueous solution was cooled to precipitate BHET. Nutsche filtration was then performed again to recover BHET.

The recovered BHET was subjected to a drying treatment in a vacuum dryer at 50°C for 8 hours, thereby giving dried BHET. The obtained BHET was white and showed no incorporation of foreign substances.

Subsequently, 254 parts by mass of the obtained dry BHET was loaded into an atmospheric-pressure reaction vessel in a nitrogen atmosphere together with 0.007 part by mass of a phosphorus-based stabilizer and also 0.07 part by mass of diantimony trioxide as a repolymerization catalyst. Next, the temperature inside the reactor was set to 285°C, and the pressure was gradually reduced under the following conditions: 10 minutes at atmospheric pressure, 10 minutes at a pressure of 4 kPa, and 40 minutes at a pressure of 0.4 kPa. The polycondensation reaction was performed while distilling off ethylene glycol and the like generated during the reaction outside the reactor. Subsequently, the reaction product in the system was continuously extruded in the form of a strand from the discharge port, cooled, and cut to obtain granular pellets of about 3 mm. The quality of the PET polymer finally produced is shown in Table 1. The obtained polymer had a melting point comparable to that of the original fiber before recycling, and also had a small yellowness index (YI) and a high whiteness index (W).

[Table 1]

| | Raw Material Sample | | | Recovered Sample | | | | Repolymerized PET | | | | |
|---|---|---|---|---|---|---|---|---|---|---|---|---|
| | Sample Name | Weight (g) | Fiber Content | Weight after Drying (g) | Yield | Melting Point (°C) | IR Waveform | L | a | b | YI | W |
| Example 1 | Artificial leather 1 | 400 | 43% | 161 | 94% | 256 | FIG. 1 | 89.6 | -3.4 | -5.6 | -8.1 | 87.7 |
| Example 2 | Artificial leather 1 | 400 | 43% | 159 | 92% | 256 | - | 89.9 | -2.8 | -5.2 | -7.7 | 88.4 |
| Example 3 | Artificial leather 1 | 400 | 43% | 156 | 91% | 256 | - | 87.1 | -3.1 | -6.2 | -9.8 | 85.4 |
| Example 4 | Artificial leather 1 | 400 | 43% | 164 | 95% | 254 | - | 86.4 | -2.9 | -5.0 | -7.6 | 85.2 |
| Example 5 | Artificial leather 1 | 400 | 43% | 158 | 92% | 255 | - | 88.8 | -3.4 | -4.8 | -6.6 | 87.3 |
| Example 6 | Artificial leather 2 | 400 | 57% | 205 | 90% | 251 | FIG. 2 | 84.0 | -2.7 | -6.0 | -10.1 | 82.7 |
| Example 7 | PET/ Foamed PU | 400 | 90% | 344 | 95% | 254 | FIG. 3 | 90.8 | -3.0 | -5.5 | -8.1 | 88.9 |
| Example 8 | PET/ Foamed PU | 400 | 90% | 338 | 94% | 256 | - | 83.7 | -2.7 | -4.3 | -6.5 | 82.9 |
| Example 9 | PET/ PU print | 400 | 44% | 168 | 96% | 254 | FIG. 4 | 88.6 | -3.0 | -5.8 | -8.9 | 86.9 |

[Comparative Example 1]

The same treatment as in Example 1 was performed, except that in the step of 4-hour stirring at atmospheric pressure in a separable flask in the polyester recovery step of Example 1, the internal temperature was 120°C instead of 160°C. As a result, the form of the sample did not change even after a lapse of 4 hours, and no dissolution of the PUs in the manganese acetate catalyst-containing EG was observed.

[Comparative Example 2]

The same treatment as in Example 1 was performed, except that in the step of 4-hour stirring at atmospheric pressure in a separable flask in the polyester recovery step of Example 1, the internal temperature was 198°C instead of 160°C. As a result, after a lapse of 4 hours, the entire sample containing PET and PUs dissolved, and it was not possible to recover the polyester by filtration.

[Comparative Example 3]

The same treatment as in Example 1 was performed, except that in the step of 4-hour stirring at atmospheric pressure in a separable flask in the method for recovering a polyester of Example 1, manganese acetate as a catalyst was not added, and only EG was used for the treatment. As a result, the form of the sample did not change even after a lapse of 4 hours, and no dissolution of the PUs in EG was observed.

[Comparative Example 4]

The same treatment as in Example 1 was performed, except that in the step of 4-hour stirring at atmospheric pressure in a separable flask in the method for recovering a polyester of Example 1, manganese acetate as a catalyst was changed to potassium carbonate. As a result, the form of the sample did not change even after a lapse of 4 hours, and no dissolution of the PUs in EG was observed.

[Example 2]

The same treatment as in Example 1 was performed, except that in the step of 4-hour stirring at atmospheric pressure in a separable flask in the method for recovering a polyester of Example 1, manganese acetate as a catalyst was changed to zinc acetate. As a result, as in Example 1, the IR measurement of the recovered material after the treatment showed no absorption at wavelengths attributable to PUs, and exhibited only a PET-derived absorption spectrum, confirming that the PUs had been almost completely removed.
The melting point and other physical properties of the recovered polyester sample are shown in Table 1.
Subsequently, PET pellets were obtained by the method described in the Polyester Recycling Step. The quality of the PET polymer finally produced is shown in Table 1.

[Example 3]

The same treatment as in Example 1 was performed, except that in the step of stirring at atmospheric pressure in a separable flask in the method for recovering a polyester of Example 1, manganese acetate as a catalyst was changed to cobalt acetate, and the stirring time was changed from 4 hours to 6 hours. As a result, as in Example 1, the IR measurement of the recovered material after the treatment showed no absorption at wavelengths attributable to PUs, and exhibited only a PET-derived absorption spectrum, confirming that the PUs had been almost completely removed.
The melting point and other physical properties of the recovered sample are shown in Table 1.
Subsequently, PET pellets were obtained by the method described in the Polyester Recycling Step. The quality of the PET polymer finally produced is shown in Table 1.

[Example 4]

The same treatment as in Example 1 was performed, except that in the step of stirring at atmospheric pressure in a separable flask in the method for recovering a polyester of Example 1, EG was changed to diethylene glycol, and the internal temperature was changed from 160°C to 180°C. As a result, as in Example 1, the IR measurement of the recovered material after the treatment showed no absorption at wavelengths attributable to PUs, and exhibited only a PET-derived absorption spectrum, confirming that the PUs had been almost completely removed.
The melting point and other physical properties of the recovered sample are shown in Table 1.
Subsequently, PET pellets were obtained by the method described in the Polyester Recycling Step. The quality of the PET polymer finally produced is shown in Table 1.

[Example 5]

The same treatment as in Example 1 was performed, except that in the step of stirring at atmospheric pressure in a separable flask in the method for recovering a polyester of Example 1, EG was changed to 1,3-propanediol, and the internal temperature was changed from 160°C to 180°C. As a result, as in Example 1, the IR measurement of the recovered material after the treatment showed no absorption at wavelengths attributable to PUs, and exhibited only a PET-derived absorption spectrum, confirming that the PUs had been almost completely removed.
The melting point and other physical properties of the recovered sample are shown in Table 1.

Subsequently, PET pellets were obtained by the method described in the Polyester Recycling Step. The quality of the PET polymer finally produced is shown in Table 1.

[Example 6]

PET pellets were obtained by the same treatment and recycling as in Example 1, except that the artificial leather 1 in the method for recovering a polyester of Example 1 was changed to an artificial leather 2.

The artificial leather 2 was as follows.

A needle-punched nonwoven fabric made of a PET short fiber having a weight per unit of 560 g/m$^2$ was used as a substrate, and the PU was changed to a polycarbonate-based wet-process PU. The substrate was impregnated and coated with the PU, forming a wet-process PU-impregnated coated substrate having a weight per unit of 882 g/m$^2$ and a resin/fiber ratio (R/F) of 37/63. In the substrate, the PU in the impregnated substrate and the PU in the coating layer both had a porous structure.

In the same manner as for the artificial leather 1, a crosslinked binder PU layer and a surface skin PU layer were further laminated on the substrate by lamination processing to obtain a grain-finished artificial leather. However, the surface skin PU layer was changed from the polyether polyester-based dry-process PU to a polycarbonate-based dry-process PU.

The obtained artificial leather 2 was an artificial leather having a thickness of 2.2 mm and a total weight per unit of 980 g/m$^2$, in which the PET nonwoven fabric constituted 57 mass% of the total, with part of the PUs being chemically crosslinked.

The melting point and other physical properties of the recovered polyester sample are shown in Table 1, and the IR waveform is shown in FIG. 2.

The quality of the PET polymer finally produced is shown in Table 1.

[Example 7]

(Polyester Recovery Step)

A 400-g sample composed of 360 g of a woven fabric made of a PET fiber and 40 g of a flexible urethane foam having a chemically crosslinked structure (hereinafter referred to as "foamed PU") was prepared. The PET woven fabric had a weight per unit of 44 g/m$^2$, an IV of 0.60 dl/g, Tg = 70°C, and Tm = 255°C. The foamed PU used was one obtained by the urethane polymerization of tolylene diisocyanate (TDI), polyoxypropylene triol, and trimethylolpropane as monomers and had a thickness of 5 mm and a density of 0.055 g/cm$^3$.

This 400-g sample was charged into a 5-liter separable flask. Next, 2,000 g of EG was prepared, then 1.5 g of manganese acetate (0.375 mass% relative to the sample) was dissolved as a catalyst, and the mixture was charged into the separable flask. Subsequently, the separable flask was heated with a mantle heater while adjusting the internal temperature to 160°C, followed by stirring at atmospheric pressure for 4 hours.

In the separable flask, the foamed PU dissolved in EG, and EG gradually became colored. After a lapse of 4 hours, the foamed PU was completely dissolved in EG, and it was visually confirmed that no solid foamed PU remained.

Stirring was stopped after a lapse of 4 hours, and the fibrous solid residue was taken out from the separable flask and compressed to remove excess treatment liquid. The treatment liquid exhibited coloration, and the mass of the lightly decolorized solid residue after compression was 652 g.

Subsequently, washing with water was performed to remove the treatment liquid remaining in the solid residue, followed by drying under vacuum in a vacuum dryer at 80°C × 8 hours, and a white fibrous residue was recovered. The mass of the recovered material after the treatment was 344 g. The IR measurement of the recovered material showed no absorption at wavelengths attributable to PUs, and exhibited only a PET-derived absorption spectrum, confirming that the PUs had been almost completely removed.

The melting point and other physical properties of the recovered polyester sample are shown in Table 1, and the IR waveform is shown in FIG. 3.

(Polyester Recycling Step)

Granular PET pellets were obtained in the same manner as in Example 1. The quality of the polyethylene terephthalate polymer finally produced is shown in Table 1.

[Example 8]

The same treatment as in Example 7 was performed, except that in the step of 4-hour stirring at atmospheric pressure in a separable flask in the method for recovering a polyester of Example 7, EG was changed to benzyl alcohol (hereinafter referred to as "BA"), the internal temperature was changed from 160°C to 130°C, and the treatment time was changed from 4 hours to 6 hours.

As in Example 7, the IR measurement of the recovered material after the treatment showed no absorption at wavelengths attributable to foamed PUs, and exhibited only a PET-derived absorption spectrum, confirming that the foamed PU had been almost completely removed.

The melting point and other physical properties of the recovered polyester sample are shown in Table 1.

Subsequently, PET pellets were obtained by the method described in the Polyester Recycling Step. The quality of the PET polymer finally produced is shown in Table 1.

[Comparative Example 5]

The same treatment as in Example 7 was performed, except that in the step of 6-hour stirring at atmospheric pressure in a separable flask in the method for recovering a polyester of Example 8, manganese acetate as a catalyst was not added, and only BA was used for the treatment. As a result, the form of the sample did not change even after a lapse of 6 hours, and no dissolution of the foamed PU in BA was observed.

[Example 9]

A 400-g woven fabric sample made of a PET fiber having a urethane resin print was prepared.

The PET woven fabric had a weight per unit of 44 $g/m^2$, an IV of 0.60 dl/g, Tg = 70°C, and Tm = 255°C. The print portion had adhering thereto 56 $g/m^2$ of a resin composed mainly of a cross-linked PU containing, as a main component, a dry-process binder polyurethane composed of polytetramethylene glycol (PTMG), isophorone diisocyanate, 1,6-hexanediamine, and triethylamine.

This 400-g sample was charged into a 5-liter separable flask. Next, 2,000 g of EG was prepared, then 1.5 g of manganese acetate (0.375 mass% relative to the sample) was dissolved as a catalyst, and the mixture was charged into the separable flask. Subsequently, the separable flask was heated with a mantle heater while adjusting the internal temperature to 160°C, followed by stirring at atmospheric pressure for 4 hours.

In the separable flask, it was observed that the print part dissolved in EG, with the contained pigment diffusing into EG. Stirring was stopped after a lapse of 4 hours, and the fabric-like solid residue was taken out from the separable flask and compressed to remove excess treatment liquid. The treatment liquid was found to be colored presumably due to the influence of the pigment and decomposition products, and the mass of the solid residue after compression was 296 g.

Subsequently, washing with water was performed to remove the treatment liquid remaining in the solid residue, followed by drying under vacuum in a vacuum dryer at 80°C × 8 hr, and a fabric-like residue was recovered. The mass of the recovered material after the treatment was 168 g.

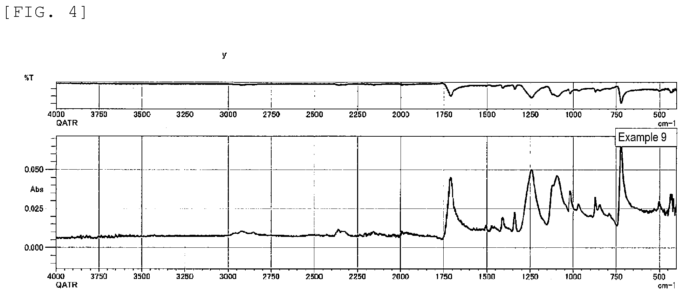

The melting point and other physical properties of the recovered polyester sample are shown in Table 1, and the IR waveform is shown in FIG. 4.

(Polyester Recycling Step)

Granular PET pellets were obtained in the same manner as in Example 1. The quality of the polyethylene terephthalate polymer finally produced is shown in Table 1.

[Example 10]

The same treatment as in Example 1 was performed, except that in the method for recovering a polyester of Example 1, the artificial leather 1 was changed to an artificial leather 3, ethylene glycol was changed to benzyl alcohol, and the treatment temperature was changed from 160°C to 130°C. The sample after washing with acetone was a white fibrous residue, and it was visually confirmed that the PU component had been removed.

The artificial leather 3 was as follows.

In the same manner as for the artificial leather 1 of Example 1, a needle-punched nonwoven fabric made of a PET short fiber having a weight per unit of 220 $g/m^2$ was used as a substrate, and impregnated and coated with a PU, forming a wet-process PU-impregnated coated substrate having a weight per unit of 412 $g/m^2$ and a resin/fiber ratio (R/F) of 47/53.

However, the PU was applied by gravure coating instead of the lamination processing using a crosslinked binder PU layer in the artificial leather 1. That is, a polyether ester-based polyurethane (solids concentration: 25%)/methyl ethyl ketone/dimethylformamide were mixed in a ratio of 100/40/160 to prepare a coating solution, and, to the surface of the wet-process PU-impregnated coated substrate, this coating solution was applied and dried three times using a #110 gravure roll. The total PU coating weight in gravure coating was 4 $g/m^2$ on a solids basis.

The obtained artificial leather 3 was an artificial leather having a total weight per unit of 416 g/m$^2$, in which the PET nonwoven fabric constituted 52 mass% of the total, with all of the PUs used being non-crosslinked.

Industrial Applicability

The method for recovering a polyester from a structure that has a substrate composed mainly of a fiber made of a polyester and contains a polyurethane resin, and also the method for producing a recycled polyester obtained by depolymerizing and then repolymerizing the polyester recovered from the structure, of the invention make it possible to separate and recover only polyesters from a structure such as an artificial leather, which have conventionally been difficult to separate and recover, and for which incineration or landfill disposal has been the only disposal option. Further, the invention has made it possible to chemically recycle them.

**Claims**

1. A method for recovering a polyester, comprising subjecting a structure that has a substrate composed mainly of a fiber made of a polyester and contains a polyurethane resin to a treatment in a lower alcohol in the presence of a first-row transition metal acetate as a catalyst at a temperature of 125°C or more and 185°C or less, thereby removing the polyurethane resin.

2. The method for recovering a polyester according to claim 1, wherein the polyurethane resin is a porous polyurethane.

3. The method for recovering a polyester according to claim 1, wherein the polyurethane resin is a chemically crosslinked polyurethane.

4. The method for recovering a polyester according to claim 1, wherein the fiber made of a polyester is made of a polyester having an alkylene terephthalate or an alkylene naphthalate as a main repeating unit.

5. The method for recovering a polyester according to claim 1, wherein the lower alcohol is an alcohol selected from the group consisting of methanol, ethanol, 1-propanol, 2-propanol, ethylene glycol, 1,2-propanediol, 1,3-propanediol, 1,3-butanediol, 1,4-butanediol, 1,5-pentanediol, diethylene glycol, ethylene glycol, glycerin, and benzyl alcohol.

6. The method for recovering a polyester according to claim 1, wherein the first-row transition metal acetate is manganese acetate, zinc acetate, or cobalt acetate.

7. The method for recovering a polyester according to claim 1, wherein the treatment is further followed by washing with water or an organic solvent.

8. A method for producing a recycled polyester, comprising depolymerizing a polyester obtained by the method according to any one of claims 1 to 7 into an aromatic bis(hydroxyalkyl) dicarboxylate, and then repolymerizing the aromatic bis(hydroxyalkyl) dicarboxylate.

[FIG. 1]

[FIG. 2]

[FIG. 3]

[FIG. 4]

## INTERNATIONAL SEARCH REPORT

| International application No. |
| --- |
| **PCT/JP2024/033371** |

**A. CLASSIFICATION OF SUBJECT MATTER**

*C08J 11/26*(2006.01)i; *B29B 17/02*(2006.01)i; *C08K 5/05*(2006.01)i; *C08L 67/00*(2006.01)i; *C08L 75/04*(2006.01)i
FI:   C08J11/26 ZAB; C08L67/00; C08L75/04; C08K5/05; B29B17/02

According to International Patent Classification (IPC) or to both national classification and IPC

**B. FIELDS SEARCHED**

Minimum documentation searched (classification system followed by classification symbols)

C08J11/26; B29B17/02; C08K5/05; C08L67/00; C08L75/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2020/130825 A1 (STICHTING WAGENINGEN RESEARCH) 25 June 2020 (2020-06-25)<br>entire text, all drawings | 1-8 |
| A | WO 2022/115602 A1 (REGENERATED TEXTILE INDUSTRIES LLC) 02 June 2022 (2022-06-02)<br>entire text, all drawings | 1-8 |
| A | CN 116745349 A (KOLON INDUSTRIES, INC.) 12 September 2023 (2023-09-12)<br>entire text, all drawings | 1-8 |
| A | JP 2008-179816 A (TORAY INDUSTRIES, INC.) 07 August 2008 (2008-08-07)<br>entire text, all drawings | 1-8 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 November 2024** | **26 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/033371**

| Patent document cited in search report | | | Publication date (day/month/year) | Patent family member(s) | | | Publication date (day/month/year) |
|---|---|---|---|---|---|---|---|
| WO | 2020/130825 | A1 | 25 June 2020 | NL | 2022268 | B1 | |
| | | | | entire text, all drawings | | | |
| WO | 2022/115602 | A1 | 02 June 2022 | US | 2024/0092991 | A1 | |
| | | | | entire text, all drawings | | | |
| CN | 116745349 | A | 12 September 2023 | US | 2024/0052131 | A1 | |
| | | | | entire text, all drawings | | | |
| JP | 2008-179816 | A | 07 August 2008 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012201994 A
- JP 2022067626 A

- JP 2008088096 A